# NEUE EUROPÄISCHE PATENTSCHRIFT

(11) **EP 0 824 231 B2**
(45) Veröffentlichungstag und Bekanntmachung des Hinweises auf die Entscheidung über den Einspruch: **17.03.2010**
(45) Hinweis auf die Patenterteilung: 14.11.2001
(21) Anmeldenummer: 97113438.2
(22) Anmeldetag: 04.08.1997
(51) Int. Cl.: G05B 19/042

(54) **Fertigungsanlage**
Manufacturing system
Système de fabrication

(30) Priorität: 13.08.1996 DE 19632609
(43) Veröffentlichungstag der Anmeldung: 18.02.1998
(73) Patentinhaber: Dürr Systems GmbH, 74321 Bietigheim-Bissingen (DE)
(72) Erfinder: Weissinger, Wolfgang, 71691 Freiberg a.N. (DE)
(74) Vertreter: Beck, Jürgen

(56) Entgegenhaltungen:
- EP-A- 0 376 738
- EP-A1- 0 540 903
- US-A- 4 459 146
- 'Sicherheit von Werkzeugmaschinen; Transfer- u. Einzweck- oder Sondermaschinen (EU Norm-Entwurf, deutsche Fassung)' ICS 25.080.01 Bd. DIN PREN, Nr. 14070, März 2001 - März 2001, BEUTH VERLAG GMBH, BERLIN,

## Beschreibung

Die Erfindung betrifft eine Fertigungsanlage, umfassend eine Vielzahl von mindestens eine Funktion realisierenden, in der Fertigungsanlage zusammenwirkenden Funktionseinheiten, von denen jede mindestens einen Aktor und mindestens einen Sensor zur Funktionssteuerung und/oder Funktionsüberwachung aufweist.

Bei derartigen Fertigungsanlagen wird bislang nach dem Konzept der sogenannten "Zentralen Intelligenz" gearbeitet, gemäß welchem jeder Funktionseinheit eine Einheit zugeordnet ist, die entweder Signale eines Sensors erfaßt und über einen sogenannten Feldbus zur zentralen Anlagensteuerung leitet oder Signale vom Zentralrechner erfaßt und gemäß diesen den Aktor ansteuert.

Dieses Konzept erfordert es, eine Vielzahl von Daten über den Feldbus auszutauschen, so daß allein hieraus eine erhebliche Störanfälligkeit resultiert.

Aus der EP 0 376 738 A2 ist eine Fertigungsanlage mit den Merkmalen des Oberbegriffs von Anspruch 1 bekannt, welche mehrere Funktionseinheiten, diese Funktionseinheiten steuernde Steuereinheiten und eine Basis-Einheit umfaßt. Jeder Bearbeitungsvorgang dieser Fertigungsanlage wird zentral gemäß einer in der Basis-Einheit abgelegten Programm-routine gesteuert, wobei die Steuereinheiten zunächst nach dem master-slave-Prinzip mit der Basis-Einheit zusammenarbeiten, um die Konfiguration der Fertigungsanlage festzustellen, und dann zeitweise von der Basis-Einheit in einen sogenannten "run"-Modus umgeschaltet werden. Jede der Steuereinheiten sendet nach Beendigung ihres jeweiligen Bearbeitungsvorgangs ein Bestätigungssignal zu der Basis-Einheit, welche anschließend die Steuereinheiten wieder in den "run"-Modus umschaltet oder bei Bedarf eine zentrale Fehlerbehandlung durchführt. Bei dieser Fertigungsanlage sind die Steuereinheiten der Funktionseinheiten von der zentralen Intelligenz der Basis-Einheit abhängig; ist diese gestört, können die Funktionseinheiten der Fertigungsanlage nicht betrieben werden.

Der Erfindung liegt daher die Aufgabe zugrunde, eine Fertigungsanlage der gattungsgemäßen Art derart zu verbessern, daß diese wartungsfreundlich und weniger störanfällig ist.

Diese Aufgabe wird durch eine Fertigungsanlage nach Anspruch 1 gelöst.

Der Vorteil der erfindungsgemäßen Lösung ist darin zu sehen, daß mit dieser nicht mehr jeder Funktionsschritt über den Feldbus im Zentralrechner bearbeitet wird, sondern die Steuereinheit die Möglichkeit eröffnet, die Funktionsschritte der Funktionseinheit eigenständig zu bearbeiten. Damit wird der Kommunikationsbedarf und somit auch die mit diesem verbundene Störanfälligkeit erheblich reduziert.

Der Modulaufbau der Steuereinheit der erfindungsgemäßen Fertigungsanlage hat den großen Vorteil, daß er einerseits sehr wartungsfreundlich ist und außerdem die Möglichkeit schafft, mehrere Leistungsmodule vorzusehen und somit mehrere Aktoren anzusteuern und außerdem mehrere Sensormodule vorzusehen, um mehrere Sensoren einsetzen zu können.

Rein prinzipiell wäre es bei dem erfindungsgemäßen Konzept nach wie vor möglich, bei besonderen, beispielsweise rechnerzeitaufwendigen Funktionen auf einen Zentralrechner über ein Bussystem zurückzugreifen. Dies hat jedoch den Nachteil, daß damit die Programmstruktur eine erhebliche Komplexität erhält.

Aus Gründen einer möglichst wenig aufwendigen Programmstruktur ist es daher besonders vorteilhaft, wenn jede Steuereinheit die gesamten vorgesehenen Funktionen mit dem Funktionssteuerprogramm eigenständig durchführt, das heißt sämtliche für die Funktionen erforderlichen Rechenoperationen selbst durchführt, so daß diesbezüglich jede Steuereinheit autark ist.

Der Vorteil dieser Lösung ist auch darin zu sehen, daß damit die Ausfallanfälligkeit erheblich reduziert wird, da die vorgesehenen Funktionen unabhängig von der Funktionsfähigkeit der Kommunikation der Steuereinheit mit anderen Einheiten durchführbar sind.

Im Extremfall wäre das erfindungsgemäße Konzept so realisierbar, daß das Funktionssteuerprogramm ohne Informationen über die anderen Steuereinheiten der anderen Funktionseinheiten arbeitet. Ein derartiges isoliertes Arbeiten ist jedoch bei komplexen Fertigungsanlagen nicht realisierbar.

Aus diesem Grund ist es erforderlich, eine Kommunikation zwischen den einzelnen Funktionseinheiten vorzusehen. Dies wird erfindungsgemäß dadurch realisiert, daß die Steuereinheit einer Funktionseinheit direkt mit der Steuereinheit mindestens einer anderen der Funktionseinheiten kommuniziert. Das heißt, daß durch direkte Kommunikation der jeweiligen Steuereinheit mit der Steuereinheit mindestens einer anderen der Funktionseinheiten ein Informationsaustausch möglich ist, so daß trotz der eigenständigen Funktionsweise in jeder Steuereinheit Informationen von anderen Funktionseinheiten berücksichtigt werden können und folglich die Möglichkeit besteht, dieselben komplexen Steuerungsvorgänge mit einem dezentralen Steuerungssystem durchzuführen, wie im Fall des aus dem Stand der Technik bekannten Konzepts der "zentralen Intelligenz".

Bei der erfindungsgemäßen Lösung ist beispielsweise vorgesehen, daß jede Steuereinheit alle für die Funktionen der Funktionseinheit notwendigen Funktionsparameter erfaßt und entsprechend diesen die Funktionseinheit steuert. Das heißt, daß die Steuereinheit als Eingangsgrößen lediglich Funktionsparameter erfaßt und damit in der Lage ist, selbständig sämtliche Steuerungsfunktionen abzuleiten. Diese Lösung hat den großen Vorteil, daß dadurch jede Steuereinheit als Eingabegrößen lediglich noch die Funktionsparameter benötigt, um in vollem Umfang die Funktionssteuerung durchführen zu können.

Aus diesem Grund ist vorgesehen, daß die Steuereinheit zumindest in einem Teil der Funktionsparameter durch Auswerten der Signale des mindestens einen Sensors umfaßt. Im einfachsten Fall einer erfindungsgemäßen Fertigungsanlage könnte es auch ausreichend sein, sämtliche Funktionsparameter durch Auswerten der Signale der dieser Steuereinheit zugeordneten Sensoren zu ermitteln.

Wie bereits ausgeführt ist es jedoch bei komplexen Anlagen erforderlich, Informationen und damit Funktionsparameter von anderen Steuereinheiten zu erhalten, so daß in diesem Fall die Steuereinheit erfindungsgemäß einen Teil der Funktionsparameter durch Kommunikation mit mindestens einer der anderen Steuereinheiten der Fertigungsanlage erfaßt.

Im Falle einer vorgesehenen Kommunikation zwischen den einzelnen Steuereinheiten ist es besonders vorteilhaft, wenn alle Steuereinheiten der Fertigungsanlage an ein Bussystem angeschlossen sind und daher über das Bussystem miteinander kommunizieren können.

Ein derartiges Bussystem kann beispielsweise ein LON-Bus, ein INTERBUS oder ein PROFIBUS sein.

Aus Gründen der Einfachheit der Kommunikation und der Flexibilität des Aufbaus der erfindungsgemäßen Fertigungsanlage ist vorzugsweise vorgesehen, daß jede Steuereinheit in der Lage ist, über das Bussystem Kommunikationssignale zu empfangen und auszusenden, so daß selbst dann, wenn im einen oder anderen Fall keinerlei Kommunikation prinzipiell nötig wäre, dies gegebenenfalls noch zu ändern.

Prinzipiell wäre es ausreichend, die Steuereinheiten so auszubilden, daß in diesen das Funktionssteuerprogramm implementiert werden kann, beispielsweise durch Einsetzen eines entsprechenden Programmspeichers oder durch einen entsprechenden Programmieranschluß.

Im Fall, daß jede Steuereinheit ohnehin über ein Bussystem kommuniziert, ist es besonders vorteilhaft, wenn jede Steuereinheit über das Bussystem programmierbar ist, da das Bussystem eine besonders einfache und vorteilhafte Möglichkeit bietet, jede Steuereinheit zu erreichen und somit über eine mit dem Bussystem verbundene Programmierstation jede Steuereinheit zu programmieren, beispielsweise dadurch, daß von der Programmierstation ein mittels dieser erstelltes Funktionssteuerprogramm über das Bussystem in die jeweilige Steuereinheit geladen wird.

Ferner sieht eine vorteilhafte Variante des erfindungsgemäßen Konzepts vor, daß die Arbeitsweise jeder Steuereinheit über das Bussystem überprüfbar ist, so daß über das Bussystem die Möglichkeit besteht, sowohl Störungen der Hardware als auch der Software zu erkennen.

Dies läßt sich im einfachsten Fall dadurch realisieren, daß jede Steuereinheit über das Bussystem Fehlermeldungen abgibt, beispielsweise wenn bei laufendem Funktionssteuerprogramm ein Programmfehler oder ein Hardwarefehler auftritt.

Im Zusammenhang mit der bisherigen Beschreibung der erfindungsgemäßen Fertigungsanlage wurde nicht näher spezifiziert, wie die Steuereinheit lokal angeordnet ist.

Beispielsweise wäre es möglich, alle Steuereinheiten - so wie bisher der Fall - in einer Schaltschrankanlage zusammenzufassen, welche lokal völlig separat von der Fertigungsanlage angeordnet ist.

Besonders vorteilhaft ist es jedoch, wenn jeder Funktionseinheit die Steuereinheit lokal zugeordnet ist, so daß dadurch das Erfordernis entfällt, eine Vielzahl von Leitungen von der Schaltschrankanlage zu den einzelnen Funktionseinheiten zu führen, um deren Aktoren und Sensoren mit der Schaltschrankanlage zu verbinden.

Noch vorteilhafter ist ein Ausführungsbeispiel, bei welchem der mindestens eine Aktor und der mindestens eine Sensor jeder Steuereinheit mit der Funktionseinheit direkt verdrahtet sind, so daß die Möglichkeit besteht, die Funktionseinheit zusammen mit der Steuereinheit zu fertigen und auch bei der Fertigung eine direkte Verdrahtung der beiden miteinander vorzunehmen.

Nach Aufbau der Fertigungsanlage ist es somit lediglich noch erforderlich, die Steuereinheit mit den jeweiligen Zuleitungen zu verbinden.

Eine besonders vorteilhafte Lösung sieht dabei vor, daß jede Steuereinheit an der jeweiligen Funktionseinheit unmittelbar angeordnet, das heißt mit deren Gestell oder Rahmen verbunden ist und somit bei der Fertigung der Funktionseinheit unmittelbar die Steuereinheit montiert und verdrahtet werden kann.

Im Fall einer lokalen Zuordnung der Steuereinheit zur Funktionseinheit ist vorteilhafterweise vorgesehen, daß das Bussystem zu jeder lokal der jeweiligen Funktionseinheit zugeordneten Steuereinheit geführt ist.

Ein besonders vorteilhaftes Ausführungsbeispiel sieht vor, daß jede Steuereinheit einen zentralrechnerunabhängig und funktionsprogrammgesteuert arbeitenden intelligenten Prozessormodul aufweist.

Um eine Verbindung zwischen dem Bussystem und dem Prozessormodul herzustellen, ist vorzugsweise vorgesehen, daß der Prozessormodul eine Sende- und Empfangseinheit aufweist, welche eine Verbindung zwischen einer Prozessoreinheit des Prozessormoduls und dem Bussystem herstellt.

Um - insbesondere bei einer lokal der Funktionseinheit zugeordneten Steuereinheit - für Wartungspersonal Informationen unmittelbar zur Verfügung zu stellen, ist vorgesehen, daß jede Steuereinheit einen eine Funktionsanzeige betreibenden Anzeigemodul aufweist.

Mit diesem Anzeigemodul ist es beispielsweise möglich, alle Arten von Betriebszuständen anzuzeigen. Besonders vorteilhaft ist es jedoch, wenn dieser Anzeigemodul dazu eingesetzt wird, über die Funktionsanzeige eine Fehleranzeige zu machen.

Um ferner, insbesondere im Notfallbetrieb, direkt auf die jeweilige Steuereinheit zugreifen und diese im Notfallbetrieb betreiben zu können, ist vorgesehen, daß jede Steuereinheit einen eine Eingabeeinheit betreibenden Ein-/Ausgabemodul umfaßt. Damit besteht beispielsweise die Möglichkeit, über einen manuell betätigbares Terminal einzusetzen, um die Steuereinheit funktionsfähig zu halten. Insbesondere in all den Fällen, in welchen die jeweilige Steuereinheit mit anderen Steuereinheiten kommuniziert, um über diese für das eigene Funtionssteuerprogramm erforderliche Funktionsparameter zu erfassen, ist es besonders vorteilhaft, wenn mit der Eingabeeinheit im Normalbetrieb von anderen Steuereinheiten für die jeweilige Steuereinheit erzeugte Kommunikationssignale, beispielsweise Funktionsparameter enthaltende Kommunikationssignale, generierbar sind. Damit ist die Möglichkeit geschaffen, mit der erfindungsgemäßen Steuereinheit - beispielsweise obwohl das Bussystem ausgefallen ist - die entsprechende Funktionseinheit betreiben zu können.

Ferner ist es ebenfalls vorgesehen, daß über die Eingabeeinheit ein Störfallbetriebsmodus der Steuereinheit aktivierbar ist, in welchem der Leistungsmodul derselben direkt ansteuerbar ist, das heißt, daß in diesem Fall keine Steuerung mehr über das Funktionssteuerprogramm mehr erfolgt, sondern eine direkte Ansteuerung des Leistungsmoduls über die Eingabeeinheit.

Eine derartige Steuerung eines Leistungsmoduls direkt über die Eingabeeinheit ist dann sinnvoll möglich, wenn erkennbar ist, welche Signale oder Parameter von den Sensoren erfaßt werden.

Aus diesem Grund sieht eine besonders vorteilhafte Lösung vor, daß die vom Sensor erfaßten Funktionsparameter von der Eingabeeinheit anzeigbar sind.

Im Zusammenhang mit der bisherigen Beschreibung der erfindungsgemäßen Fertigungsanlage wurde nicht im einzelnen darauf eingegangen, wie die Fertigungsanlage in die einzelnen Funktionseinheiten unterteilt ist.

So sieht ein besonders vorteilhaftes Ausführungsbeispiel vor, daß jede Funktionseinheit einen eigenen Funktionsabschnitt der Fertigungsanlage bildet und somit die Funktionseinheiten entsprechend den einzelnen Teilfunktionen der Fertigungsanlage konzipiert sind.

Vorzugsweise ist die erfindungsgemäße Fertigungsanlage so aufgebaut, daß diese eine Eingangseinheit und eine Ausgangseinheit für zu bearbeitendes Gut aufweist und daß das Gut die zwischen der Eingangseinheit und der Ausgangseinheit angeordneten Funktionseinheiten durchläuft.

Auch jede Funktionseinheit kann zweckmäßigerweise so ausgebildet sein, daß sie einen Einlaß zum Übernehmen des Guts und einen Auslaß zum Übergeben des Guts aufweist. In diesem Fall läßt sich der Durchlauf des Guts durch die jeweilige Funktionseinheit besonders einfach mit Sensoren erfassen.

Eine besonders günstige funktionelle Struktur der erfindungsgemäßen Fertigungsanlage sieht vor, daß jede zwischen der Eingangseinheit und der Ausgangseinheit angeordnete Funktionseinheit das Gut von der vorangehenden Funktionseinheit übernimmt und nach Realisierung der eigenen Funktion an die nachfolgende Funktionseinheit abgibt.

Darüber hinaus wird die eingangs genannte Aufgabe auch durch ein Verfahren zum Betreiben einer Fertigungsanlage nach Anspruch 19 gelöst.

Der Vorteil der erfindungsgemäßen Lösung ist ebenfalls darin zu sehen, daß damit die Notwendigkeit einer Kommunikation erheblich verringert wird und somit auch die Störanfälligkeit einer derartigen Fertigungsanlage erheblich reduziert wird.

Besonders zweckmäßig ist es dabei, wenn von jeder Steuereinheit die gesamten vorgesehenen Funktionen eigenständig gesteuert werden.

Ein besonders zweckmäßiges erfindungsgemäßes Verfahren sieht vor, daß die jeweilige Steuereinheit direkt mit der Steuereinheit mindestens einer anderen der Funktionseinheiten kommuniziert, für den Fall, daß es erforderlich ist, Informationen über Funktionen der anderen Steuereinheiten zu erhalten und verarbeiten zu können, was insbesondere für das Betreiben komplexer Fertigungsanlagen erforderlich ist.

Eine besonders günstige Variante des erfindungsgemäßen Verfahrens sieht vor, daß von jeder Steuereinheit alle für die Funktion der Funktionseinheit notwendigen Funktionsparameter erfaßt werden und entsprechend diesen die Funktionseinheit gesteuert wird. Damit ist es für jede Steuereinheit lediglich erforderlich, noch Funktionsparameter zu erfassen und die Steuereinheit ist in der Lage, alle übrigen für die Steuerung der Funktionen erforderlichen Rechenoperationen selbst durchzuführen.

Die Funktionsparameter werden zumindest zu einem Teil durch Auswerten der Signale des mindestens einen Sensors der Steuereinheit erfaßt, so daß hierzu keinerlei Kommunikation erforderlich ist.

Wie bereits erwähnt ist es jedoch bei komplexen Fertigungsanlagen erforderlich, Informationen, insbesondere Funktionsparametern von anderen Steuereinheiten zu erhalten. Aus diesem Grund ist vorgesehen, daß von der Steuereinheit ein Teil der Funktionsparameter durch direkte Kommunikation mit mindestens einer anderen der Steuereinheiten der Fertigungsanlage erfaßt wird.

Die Kommunikation zwischen den Steuereinheiten erfolgt vorzugsweise so, daß von allen Steuereinheiten Informationen an ein Bussystem abgegeben oder von einem Bussystem empfangen werden.

Ein besonders einfacher Zugriff ist auf die einzelnen Steuereinheiten dann möglich, wenn jede Steuereinheit über das Bussystem programmiert werden kann, so daß das Bussystem nicht nur zur Übermittlung von Kommunikationen, sondern auch zur Übermittlung von Programminformationen für die einzelnen Steuereinheiten vorteilhafterweise eingesetzt werden kann.

Darüber hinaus läßt sich das Bussystem weiterhin noch vorteilhaft einsetzen, wenn die Arbeitsweise jeder Steuereinheit über das Bussystem überprüft werden kann.

Dies läßt sich im einfachsten Fall dadurch realisieren, daß von jeder Steuereinheit über das Bussystem Fehlermeldungen abgegeben werden.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische ausschnittsweise Darstellung eines ersten Ausführungsbeispiels einer erfindungsgemäßen Fertigungsanlage;
- Fig. 2: eine schematische Darstellung ähnlich Fig. 1 eines zweiten Ausführungsbeispiels einer erfindungsgemäßen Fertigungsanlage;
- Fig. 3: eine schematische Darstellung der Verbindung zwischen den Steuereinheiten untereinander und mit den notwendigen Versorgungen bei einem erfindungsgemäßen dezentralen Steuerungssystem;
- Fig. 4: eine schematische Darstellung einzelner Module einer erfindungsgemäßen Steuereinheit;
- Fig. 5: eine schematische Darstellung der wichtigsten Komponenten des Basismoduls;
- Fig. 6: eine schematische Darstellung der wichtigsten Komponenten des Leistungsmoduls;
- Fig. 7: eine schematische Darstellung der wichtigsten Komponenten des Sensormoduls und
- Fig. 8: eine schematische Darstellung der wichtigsten Komponenten des Prozessormoduls.

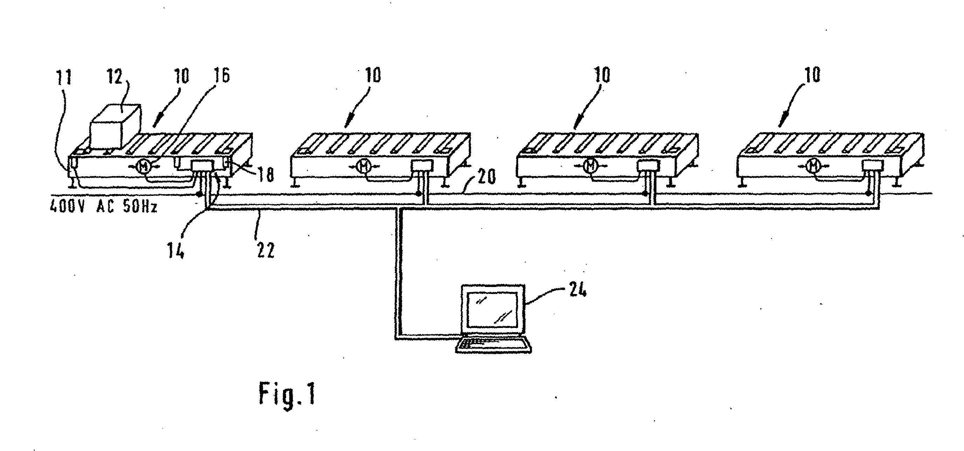

Ein Ausführungsbeispiel einer erfindungsgemäßen Fertigungsanlage, exemplarisch dargestellt in Fig. 1, umfaßt eine Vielzahl von Funktionseinheiten 10, in diesem Fall Rollenbahneinheiten, welche als selbständige Module aufgebaut sind und in der Fertigungsanlage, beispielsweise aufeinanderfolgend angeordnet sind und zusammenwirken, um in diesem Fall beispielsweise ein Transportgut 12, wie zum Beispiel ein Werkstück, entsprechend der Fertigungsfolge zu fördern.

An jeder dieser Funktionseinheiten 10 ist unmittelbar an einem Gestell 11 derselben eine Steuereinheit 14 angeordnet, welche dazu dient, einerseits einen als Aktor 16 dienenden und in diesem Fall die Rollen antreibenden Aktor M anzusteuern, wobei die Ansteuerung des Aktors 16 über Signale von Sensoren 18 erfolgt, welche beispielsweise als Funktionsparameter die Position des Guts 12 längs der Fertigungsanlage ermitteln, so daß ein Transport des Gutes 12 längs der einzelnen Funktionseinheiten 10 entsprechend der tatsächlichen Position des Guts 12 und der vom Fertigungsablauf her geforderten Position des Guts 12 erfolgen kann.

Jede der Steuereinheiten 14 ist mit einem Leistungsversorgungsnetz 20 direkt verbunden, welches die elektrische Leistung für den Betrieb der Aktoren 16 zur Verfügung stellt.

Darüber hinaus ist jede Funktionseinheit 10 mit einem Bussystem 22 verbunden, welches eine Kommunikation zwischen den einzelnen Steuereinheiten 14 erlaubt.

Mit dem Bussystem 22 ist ferner noch eine Zentralstation 24 verbunden, deren Funktion nachfolgend noch im einzelnen erläutert wird.

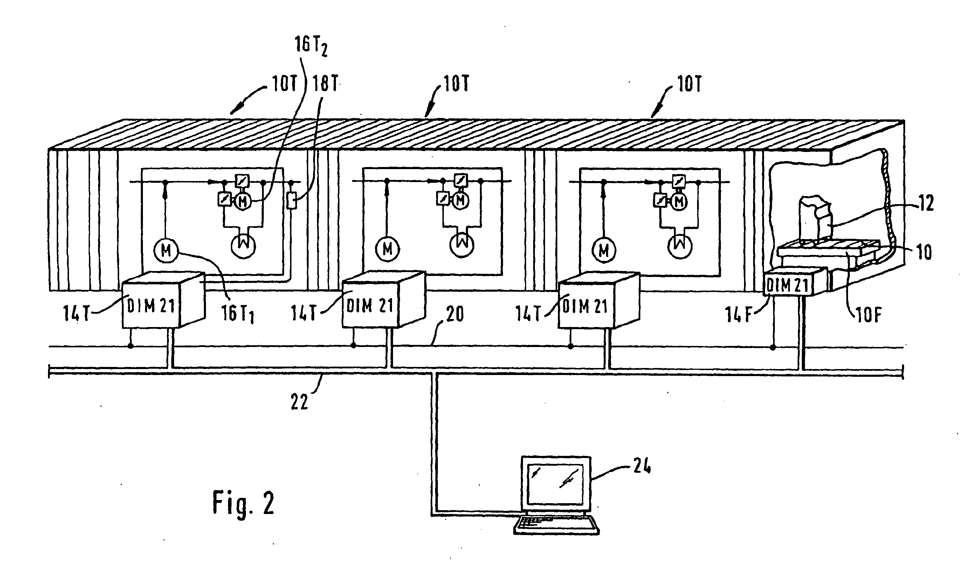

Bei einem zweiten Ausführungsbeispiel einer erfindungsgemäßen Fertigungsanlage, dargestellt in Fig. 2, sind die einzelnen Funktionseinheiten 10 nicht miteinander identisch, sondern stellen unterschiedliche Funktionseinheiten der Fertigungsanlage dar. So umfaßt die Fertigungsanlage beispielsweise Trocknereinheiten 10T von denen jede mit einer erfindungsgemäßen Steuereinheit 14T versehen ist, die in diesem Fall als ersten Aktor 16T₁ einen Gebläsemotor und als zweiten Aktor 16T₂ einen Stellmotor für Luftklappen ansteuert und dies aufgrund des Signals eines erfassenden Sensors 18T, der als Funktionsparameter die Temperatur erfaßt.

Um das Werkstück 12 durch die einzelnen Trocknereinheiten 10T zu transportieren, ist zusätzlich jeder Trocknereinheit 10T noch eine Fördereinheit 10F als Funktionseinheit zugeordnet, die ebenfalls über eine dieser jeweils lokal zugeordnete Steuereinheit 14F ansteuerbar ist, und zwar beispielsweise in der gleichen Weise, wie grundsätzlich im Zusammenhang mit dem ersten Ausführungsbeispiel gemäß Fig. 1 beschrieben.

Das heißt, daß bei dem zweiten Ausführungsbeispiel in jedem Abschnitt der Fertigungsanlage als selbständige Funktionseinheiten 10 nebeneinander sowohl eine Trocknereinheit 10T als auch eine Fördereinheit 10F angeordnet sind, wobei jede mit einer erfindungsgemäßen Steuereinheit 14T bzw. 14F ausgerüstet ist und alle miteinander über dasselbe Bussystem 22 kommunizieren und außerdem über dasselbe Leistungsversorgungsnetz 20 versorgt sind.

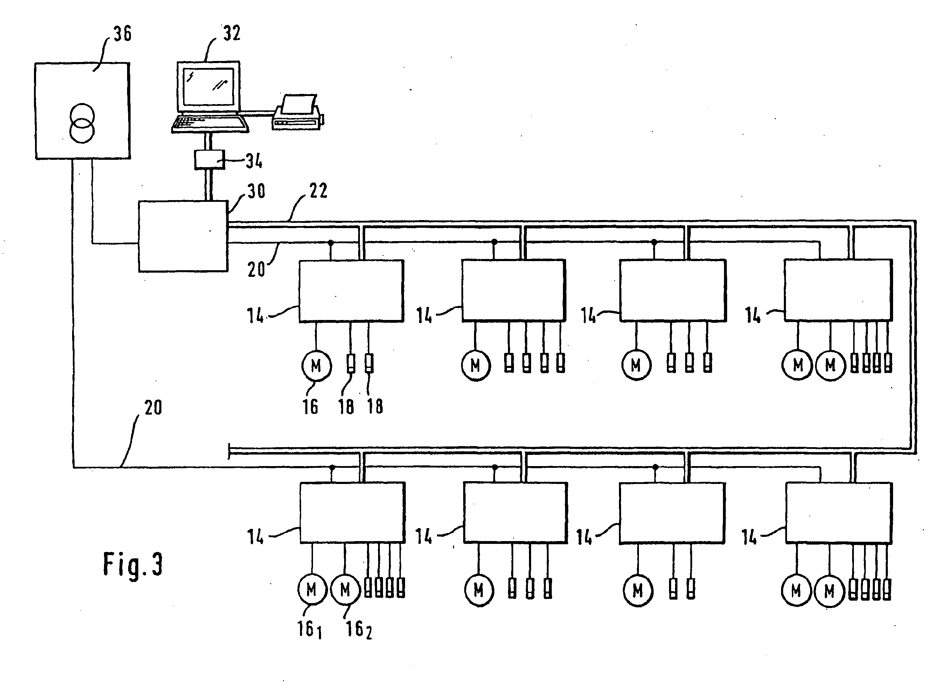

Das erfindungsgemäße Konzept der Verbindung aller selbständigen Steuereinheiten 14, beispielsweise über ein LON Bussystem 22 ist nochmals in Fig. 3 verdeutlicht.

Am LON Bussystems 22 ist beispielsweise eine Mensch-Maschine-Schnittstelle 30 vorgesehen, welcher über das LON Bussystem 22 mit den einzelnen Steuereinheiten 14 kommuniziert.

Ferner ist auf das LON Bussystem 22 noch ein externer Zugriff, beispielsweise über einen externen Computer 32 mittels eines Adapters 34 möglich, wobei beispielsweise über diesen externen Computer 32 eine Kommunikation mit den einzelnen Steuereinheiten 14 möglich ist.

Wie bereits beschrieben, ist jeder dieser Steuereinheiten 14 einer oder mehrere Aktoren 16 und einer oder mehrere Sensoren 18 zugeordnet, um die entsprechende Funktionseinheit 10 anzusteuern.

Ferner ist jede Steuereinheit mit dem Leistungsversorgungsnetz 20 verbunden, welches seinerseits von einer zentralen Versorgungsstation 36 gespeist ist.

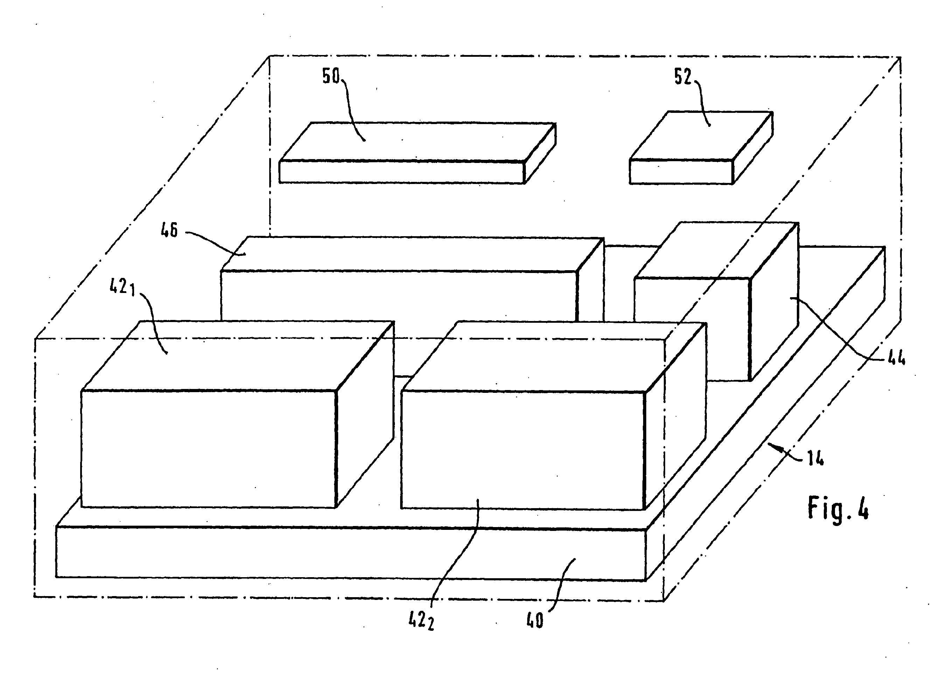

Wie in Fig. 4 dargestellt, ist jede der Steuereinheiten 14 modular aufgebaut, das Grundmodul jeder Steuereinheit ist ein Basismodul 40, mit welchem eine variable Zahl von Leistungsmodulen 42₁ und 42₂ verbunden ist.

Ferner ist mit dem Basismodul 40 ein Prozessormodul 44 und eine variable Zahl von Sensormodulen 46, entsprechend der Zahl der Sensoren verbunden.

Eine Anzeige der Funktion und Arbeitsweise der Steuereinheit 14 erfolgt über einen Anzeigemodul 50 und ferner ist über eine Eingabeeinheit 52 - beispielsweise ein Handterminalein BUS-externer Zugriff auf die Steuereinheit 14 möglich.

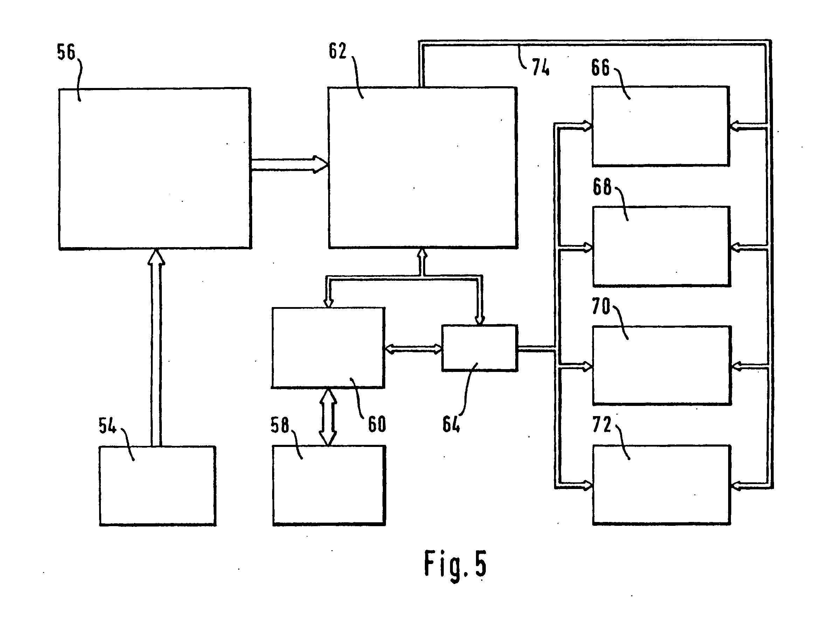

Wie in Fig. 5 dargestellt, ist das Basismodul 40 mit einem Anschluß 54 für das Leistungsversorgungsnetz 20 versehen, der mit einer Spannungsaufbereitungseinheit 56 verbunden ist.

Ferner ist das Basismodul 40 mit einem Anschluß 58 für das Bussystem 22 versehen, welcher mit einem Anschluß 60 für den Prozessormodul 44 verbunden ist. Der Prozessormodul 44 ist außerdem noch mit einer Niederspannungsversorgung 62 verbunden, welche von der Spannungsaufbereitungseinheit 56 gespeist ist.

Die Niederspannungsversorgung 62 versorgt beispielsweise außerdem noch einen Buscontroller 64 eines internen Bussystems 74 der Steuereinheit 14, einen Anschluß 66 des Sensormoduls 46, einen Anschluß 68 des Anzeigemoduls 50, einen Anschluß 70 der Eingabeeinheit 52 und Anschlüsse 72 für die Leistungsmodule 42.

Ferner sind der Anschluß 60 des Prozessormoduls 44, der Anschluß 66 des Ein/Ausgabemoduls 48, der Anschluß 68 des Anzeigemoduls 50, der Anschluß 70 für die Eingabeeinheit 52 und die Anschlüsse 72 für die Leistungsmodule 42 mit dem Prozessormodul 44, beispielsweise über das interne Bussystem 74, verbunden, welches der internen Kommunikation der einzelnen Module der jeweiligen Steuereinheit 14 dient.

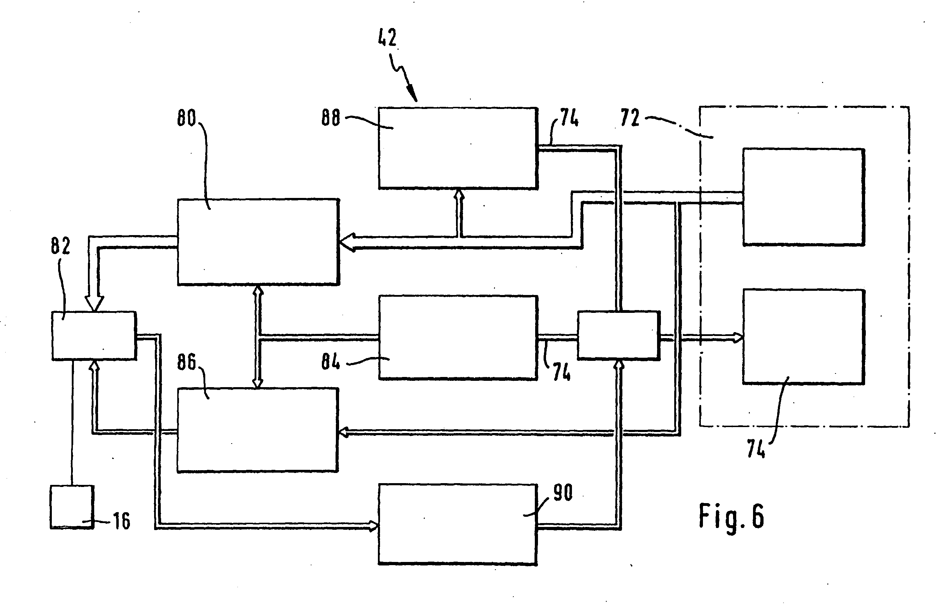

Jeder der Leistungsmodule 42 umfaßt seinerseits, wie in Fig. 6 dargestellt, eine Leistungselektronik 80, welche direkt mit dem Anschluß 72 verbunden ist und dadurch auch mit der entsprechenden elektrischen Leistung versorgt ist.

Die Leistungselektronik 80 ist ferner ihrerseits mit einem Anschluß 82 für den Aktor 16, beispielsweise einen Motor M, verbunden, in welchem diesem die erforderliche Energie zugeführt wird.

Die Leistungselektronik 80 wird angesteuert über eine Steuerschaltung 84, welche mit dem Prozessormodul 44, beispielsweise mittels des internen Bussystems 74, verbunden ist, wobei die Verbindung mit dem internen Bussystem 74 ebenfalls über den Anschluß 72 erfolgt. Die Steuerschaltung 84 steuert jedoch nicht nur die Leistungselektronik 80, sondern auch eine Versorgung 86 für ein dem Aktor 16 zugeordnetes Bremsrelais, wobei die Ansteuerung dieses Bremsrelais über den Motoranschluß 82 erfolgt.

Zusätzlich ist in jedem Leistungsmodul 42 eine Phasenüberwachung 88 vorgesehen, welche zur Überwachung der der Leistungselektronik 80 zugeführten elektrischen Energie dient. Die Phasenüberwachung 88 ist ebenfalls mit dem Prozessormodul 44, beispielsweise mittels des internen Bussystems 74, verbunden und übermittelt über dieses Phaseninformation beispielsweise der Steuerschaltung 84.

Ferner ist mit dem Motoranschluß 82 noch eine Motortemperaturüberwachung 90 verbunden, welche mit dem Prozessormodul 44, beispielsweise über das interne Bussystem 74, mit der Steuerschaltung 84 ebenfalls Information über die Motortemperatur austauscht.

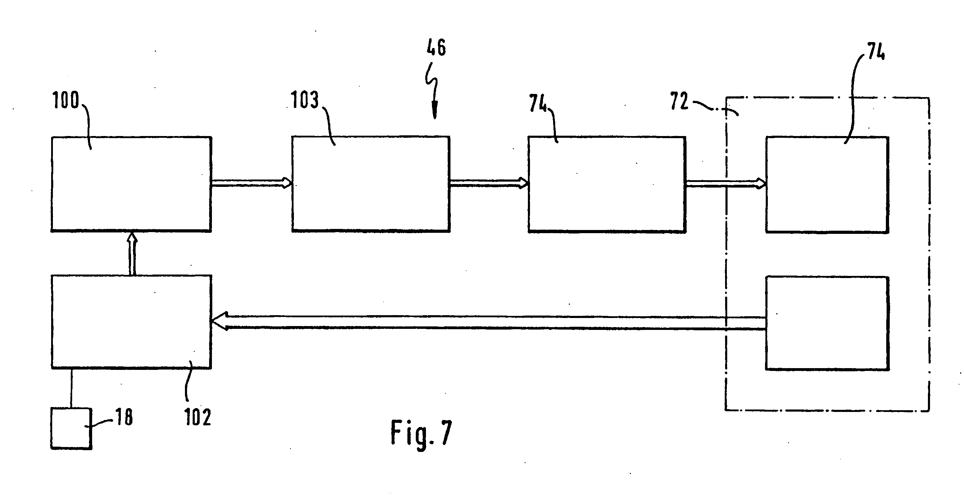

Jeder Sensormodul 46 umfaßt, wie in Fig. 7 dargestellt, ausgehend von dem für diesen vorgesehenen Anschluß 72 am Basismodul 40 eine Signalaufbereitungseinheit 100, welche über einen Sensoranschluß 102 mit dem jeweiligen Sensor 18 verbunden ist und dessen Signale entsprechend aufbereitet. Die Signalaufbereitungseinheit 100 gibt diese Signale über eine galvanische Trennung 103 an das interne Bussystem 74 ab, welches ebenfalls über den Anschluß 76 mit der Steuereinheit 46 verbunden ist.

Ferner ist über den Anschluß 72 eine direkte Versorgung des Sensoranschlusses 102 mit vom Basismodul 40 zur Verfügung gestellter Niederspannung vorgesehen.

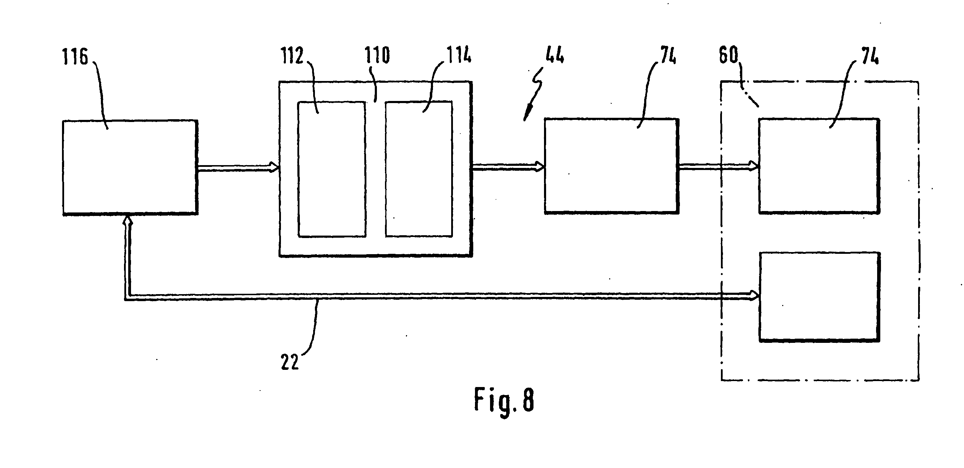

Wie in Fig. 8 dargestellt, umfaßt der Prozessormodul 44 eine über den Anschluß 60 hergestellte Verbindung mit den übrigen Modulen, beispielsweise über das interne Bussystem 74 mit einer Prozessoreinheit 110, welche beispielsweise einen LON Prozessor umfaßt, welcher nicht nur einen Rechner 112 sondern auch einen ausreichend großen Steuerungsprogrammspeicher 114 aufweist.

Die Prozessoreinheit 110 kommuniziert dabei mit einer Sende-/Empfangseinheit 116 für das Bussystem 22, welche über den Anschluß 60 mit dem Bussystem 22 verbunden ist und über welche somit die Kommunikation mit dem Bussystem 22 erfolgt.

In dem Programmspeicher 114 ist ein Funktionssteuerprogramm niedergelegt, welches es erlaubt, sämtliche Funktionen der Funktionseinheit 10 zu steuern.

## Patentansprüche

1. Fertigungsanlage, umfassend eine Vielzahl von mindestens eine Funktion realisierenden, in der Fertigungsanlage zusammenwirkenden Funktionseinheiten (10), von denen jede mindestens einen Aktor (16) und mindestens einen Sensor (18) zur Funktionssteuerung und/oder Funktionsüberwachung aufweist,
**dadurch gekennzeichnet, dass** jede Funktionseinheit (10) mindestens eine die Funktionseinheit (10) zentralrechnerunabhängig und nach einem eigenen, in einem Programmspeicher (114) gespeicherten Funktionssteuerprogramm betreibende intelligente Steuereinheit (14) aufweist, welche entsprechend dem Funktionssteuerprogramm den mindestens einen Aktor (16) ansteuert und/oder Signale des mindestens einen Sensors (18) auswertet,
wobei jede Steuereinheit (14)
ein den mindestens einen Aktor (16) ansteuerndes Leistungsmodul (42), das mit einem Anschluss (82) zum Zuführen der erforderlichen Energie zu dem Aktor (16) und mit einer Phasenüberwachung (88) versehen ist,
ein den mindestens einen Sensor (18) betreibendes und dessen Signale empfangendes Sensormodul (46), das mit einem Sensoranschluss (102) zum Versorgen des Sensors (18) mit Niederspannung versehen ist,
ein Basismodul (40), das mit einem Anschluss (54) für ein Leistungsversorgungsnetz (20), welches zu der Steuereinheit (14) geführt ist, mit einem Anschluss (72) für das Leistungsmodul (42), durch welchen das Leistungsmodul (42) mit elektrischer Leistung versorgt ist, und mit einem Anschluss (72) für das Sensormodul (46), durch welchen der Sensoranschluss (102) mit Niederspannung versorgt ist, versehen ist, und
ein eine Eingabeeinheit (52) betreibendes Ein-/Ausgabemodul (48) umfasst, wobei über die Eingabeeinheit (52) ein Störfallbetriebsmodus der Steuereinheit (14) aktivierbar ist, in welchem das Leistungsmodul (42) direkt ansteuerbar ist.

2. Fertigungsanlage nach Anspruch 1, **dadurch gekennzeichnet, dass** jede Steuereinheit (14) die gesamten vorgesehenen Funktionen mit dem Funktionssteuerprogramm eigenständig durchführt.

3. Fertigungsanlage nach Anspruch 1 oder 2, **dadurch gekennzeichnet, dass** die Steuereinheit (14) einer Funktionseinheit (10) direkt mit der Steuereinheit (14) mindestens einer anderen der Funktionseinheiten (10) kommuniziert.

4. Fertigungsanlage nach einem der voranstehenden Ansprüche, **dadurch gekennzeichnet, dass** jede Steuereinheit (14) alle für die Funktion der Funktionseinheit (10) notwendigen Funktionsparameter erfasst und entsprechend diesen die Funktionseinheit (10) steuert.

5. Fertigungsanlage nach einem der voranstehenden Ansprüche, **dadurch gekennzeichnet, dass** alle Steuereinheiten (14) der Fertigungsanlage an ein Bussystem (22) angeschlossen sind.

6. Fertigungsanlage nach Anspruch 5, **dadurch gekennzeichnet, dass** jede Steuereinheit (14) in der Lage ist, über das Bussystem (22) Kommunikationssignale zu empfangen und auszusenden.

7. Fertigungsanlage nach einem der Anspruch 6, **dadurch gekennzeichnet, dass** jede Steuereinheit (14) über das Bussystem (22) programmierbar ist.

8. Fertigungsanlage nach Anspruch 6 oder 7, **dadurch gekennzeichnet, dass** die Arbeitsweise jeder Steuereinheit (14) über das Bussystem (22) überprüfbar ist.

9. Fertigungsanlage nach einem der Ansprüche 6 bis 8, **dadurch gekennzeichnet, dass** jede Steuereinheit (14) über das Bussystem (22) Fehlermeldungen abgibt.

10. Fertigungsanlage nach einem der voranstehenden Ansprüche, **dadurch gekennzeichnet, dass** jeder Funktionseinheit (10) die Steuereinheit (14) lokal zugeordnet ist.

11. Fertigungsanlage nach Anspruch 10, **dadurch gekennzeichnet, dass** der mindestens eine Aktor (16) und der mindestens eine Sensor (18) jeder Steuereinheit (14) mit der Funktionseinheit (10) direkt verdrahtet sind.

12. Fertigungsanlage nach Anspruch 10 oder 11, **dadurch gekennzeichnet, dass** jede Steuereinheit (14) an der jeweiligen Funktionseinheit (10) unmittelbar angeordnet ist.

13. Fertigungsanlage nach einem der Ansprüche 10 bis 12, **dadurch gekennzeichnet, dass** das Bussystem (22) zu jeder lokal der Funktionseinheit (10) zugeordneten Steuereinheit geführt ist.

14. Fertigungsanlage nach einem der voranstehenden Ansprüche, **dadurch gekennzeichnet, dass** jede Steuereinheit (14) ein zentralrechnerunabhängig und funktionsprogrammgesteuert arbeitendes intelligentes Prozessormodul (44) aufweist, wobei das Prozessormodul (44) eine Sende- und Empfangseinheit (116) aufweist, welche eine Verbindung zwischen einer Prozessoreinheit (110) des Prozessormoduls (44) und einem Bussystem (22) herstellt.

15. Fertigungsanlage nach einem der Ansprüche 1 bis 14, **dadurch gekennzeichnet, dass** jede Steuereinheit (14) ein eine Funktionsanzeige betreibendes Anzeigemodul (50) aufweist.

16. Fertigungsanlage nach einem der Ansprüche 1 bis 15, **dadurch gekennzeichnet, dass** mit der Eingabeeinheit (52) im Normalbetrieb von anderen Steuereinheiten (14) für die jeweilige Steuereinheit (14) erzeugte Kommunikationssignale generierbar sind.

17. Fertigungsanlage nach einem der Ansprüche 1 bis 16, **dadurch gekennzeichnet, dass** die vom Sensor (18) erfassten Funktionsparameter von der Eingabeeinheit (52) anzeigbar sind.

18. Fertigungsanlage nach einem der voranstehenden Ansprüche, **dadurch gekennzeichnet, dass** jede Funktionseinheit (10) einen eigenen Funktionsabschnitt der Fertigungsanlage bildet.

19. Verfahren zum Betreiben einer Fertigungsanlage, umfassend eine Vielzahl von mindestens eine Funktion realisierenden, in der Fertigungsanlage zusammenwirkenden Funktionseinheiten (10), von denen jede mindestens einen Aktor (16) und mindestens einen Sensor (18) zur Funktionssteuerung und/oder Funktionsüberwachung aufweist, **dadurch gekennzeichnet, dass** jede Funktionseinheit (10) von einer Steuereinheit (14) zentralrechnerunabhängig und nach einem eigenen, in einem Programmspeicher (114) gespeicherten Funktionssteuerprogramm betrieben wird, wobei entsprechend dem Funktionssteuerprogramm der Aktor (16) angesteuert und/oder Signale des Sensors (18) ausgewertet werden,
dass der mindestens eine Aktor (16) von einem Leistungsmodul (42) der Steuereinheit (14), in dem eine Phasenüberwachung (88) vorgesehen ist, angesteuert wird und die erforderliche Energie dem Aktor (16) über einen Anschluss (82) des Leistungsmoduls (42) zugeführt wird,
dass der mindestens eine Sensor (18) von einem Sensormodul (46) der Steuereinheit (14) betrieben wird und der Sensor (18) über einen Sensoranschluss (102) des Sensormoduls (46) mit Niederspannung versorgt wird,
dass ein Basismodul (40) der Steuereinheit (14) an ein Leistungsversorgungsnetz (20), welches zu der Steuereinheit (14) geführt ist, angeschlossen ist, das Leistungsmodul (42) über einen Anschluss (72) des Basismoduls (40) mit elektrischer Leistung versorgt wird und das Sensormodul (46) über einen Anschluss (72) des Basismoduls (40) mit Niederspannung versorgt wird, und
dass ein Ein-/Ausgabemodul (48) der Steuereinheit (14) eine Eingabeeinheit (52) betreibt, wobei in einem Störfall über die Eingabeeinheit (52) ein Störfallbetriebsmodus der Steuereinheit (14) aktiviert wird, in welchem das Leistungsmodul (42) direkt angesteuert wird.

20. Verfahren nach Anspruch 19, **dadurch gekennzeichnet, dass** in jeder Steuereinheit (14) die gesamten vorgesehenen Funktionen eigenständig gesteuert werden.

21. Verfahren nach Anspruch 19 oder 20, **dadurch gekennzeichnet, dass** die jeweilige Steuereinheit (14) direkt mit der Steuereinheit (14) mindestens einer anderen der Funktionseinheiten (10) kommuniziert.

22. Verfahren nach einem der Ansprüche 19 bis 21, **dadurch gekennzeichnet, dass** von jeder Steuereinheit alle für die Funktion der Funktionseinheit notwendigen Funktionsparameter erfasst werden und entsprechend diesen die Funktionseinheit gesteuert wird.

23. Verfahren nach Anspruch 22, **dadurch gekennzeichnet, dass** von der Steuereinheit ein Teil der Funktionsparameter durch direkte Kommunikation mit mindestens einer anderen der Steuereinheiten der Fertigungsanlage erfasst wird.

24. Verfahren nach einem der Ansprüche 19 bis 23, **dadurch gekennzeichnet, dass** von allen Steuereinheiten Informationen an ein Bussystem abgegeben oder von einem Bussystem empfangen werden.

25. Verfahren nach Anspruch 24, **dadurch gekennzeichnet, dass** jede Steuereinheit über das Bussystem programmiert werden kann.

26. Verfahren nach Anspruch 24 oder 25, **dadurch gekennzeichnet, dass** die Arbeitsweise jeder Steuereinheit über das Bussystem überprüft werden kann.

27. Verfahren nach Anspruch 26, **dadurch gekennzeichnet, dass** von jeder Steuereinheit über das Bussystem Fehlermeldungen abgegeben werden.

## Claims

1. A manufacturing plant comprising a plurality of functional units (10) which implement at least one function and which co-operate with one another in the manufacturing plant and each of which comprises at least one actuator (16) and at least one sensor (18) for function control and/or function monitoring, **characterised in that** each functional unit (10) comprises at least one intelligent control unit (14) which drives the functional unit (10) independently of a central computer in accordance with an individual function control programme stored in a programme store (114) and which controls the at least one actuator (16) and/or evaluates the signals from the at least one sensor (18) in accord with the function control programme,
whereby each control unit (14) comprises
a power module (42) controlling the at least one actuator (16), whereby said module (42) is provided with a connector terminal (82), for supplying the requisite energy to the actuator (16), and with a phase monitoring means (88),
a sensor module (46) for driving the at least one sensor (18) and receiving the signals therefrom, whereby said module (46) is provided with a sensor connector terminal (102) for supplying the sensor (18) with a low tension voltage,
a base module (40) which is provided with a connector terminal (54) for a power supply network (20) which runs to the control unit (14), with a connector terminal (72) for the power module (42) via which said power module (42) is supplied with electrical power, and with a connector terminal (72) for the sensor module (46) through which the sensor connector terminal (102) is supplied with low tension voltage, and
an input/output module (48) driving an input unit (52), wherein a fault operation mode of the control unit, in which the power module (42) is directly controllable, can be activated by the input unit (52).

2. A manufacturing plant in accordance with Claim 1, **characterised in that** each control unit (14) carries out all of the envisaged functions independently using the function control programme.

3. A manufacturing plant in accordance with Claim 1 or 2, **characterised in that** the control unit (14) for one functional unit (10) communicates directly with the control unit (14) of at least one of the other functional units (10).

4. A manufacturing plant in accordance with any of the preceding Claims, **characterised in that** each control unit (14) acquires all of the functional parameters required for the functioning of the functional unit (10) and controls the functional unit (10) in accordance therewith.

5. A manufacturing plant in accordance with any of the preceding Claims, **characterised in that** all of the control units (14) in the manufacturing plant are connected to a bus system (22).

6. A manufacturing plant in accordance with Claim 5, **characterised in that** each control unit (14) is capable of receiving and transmitting communications signals over the bus system (22).

7. A manufacturing plant in accordance with Claim 6, **characterised in that** each control unit (14) is programmable over the bus system (22).

8. A manufacturing plant in accordance with Claim 6 or 7, **characterised in that** the operation of each control unit (14) is adapted to be checked over the bus system (22).

9. A manufacturing plant in accordance with any of the Claims 6 to 8, **characterised in that** each control unit (14) transmits error messages over the bus system (22).

10. A manufacturing plant in accordance with any of the preceding Claims, **characterised in that** the control unit (14) is associated locally with each functional unit (10).

11. A manufacturing plant in accordance with Claim 10, **characterised in that** the at least one actuator (16) and the at least one sensor (18) in each control unit (14) are wired directly to the functional unit (10).

12. A manufacturing plant in accordance with Claim 10 or 11, **characterised in that** each control unit (14) is arranged directly on the respective functional unit (10).

13. A manufacturing plant in accordance with any of the Claims 10 to 12, **characterised in that** the bus system (22) runs to each control unit associated locally with the functional unit (10).

14. A manufacturing plant in accordance with any of the preceding Claims, **characterised in that** each control unit (14) comprises an intelligent processor module (44) which operates independently of a central computer under the control of the function programme, whereby the processor module (44) comprises a transmitting and receiving unit (116) which produces a connection between a processor unit (110) in the processor module (44) and a bus system (22).

15. A manufacturing plant in accordance with any of the Claims 1 to 14, **characterised in that** each control unit (14) comprises an indicator module (50) driving a function display means.

16. A manufacturing plant in accordance with any of the claims 1 to 15, **characterised in that** communications signals produced in normal operation by other control units (14) for the respective control unit (14) can be generated by the input unit (52).

17. A manufacturing plant in accordance with any of the Claims 1 to 16, **characterised in that** the functional parameters acquired by the sensor (18) are displayable by the input unit (52).

18. A manufacturing plant in accordance with any of the preceding Claims, **characterised in that** each functional unit (10) forms an individual functional section of the manufacturing plant.

19. A method of operating a manufacturing plant comprising a plurality of functional units (10) which implement at least one function and which co-operate with one another in the manufacturing plant and each of which comprises at least one actuator (16) and at least one sensor (18) for function control and/or function monitoring, **characterised in that** each functional unit (10) is driven by a control unit (14) independently of a central computer in accordance with an individual function control programme stored in a programme store (114), whereby the actuator (16) is controlled and/or the signals from the sensor (18) are evaluated in accord with the function control programme,
**in that** the at least one actuator (16) is controlled by a power module (42) of the control unit (14), a phase monitoring means (88) being provided in the power module, and the requisite energy for the actuator (16) is supplied via a connector terminal (82) of said power module (42),
**in that** the at least one sensor (18) is driven by a sensor module (46) of the control unit (14), and the sensor (18) is supplied with a low tension voltage via a sensor connector terminal (102) of said sensor module (46),
**in that** a base module (40) of the control unit (14) is connected to a power supply network (20) which runs to the control unit (14), the power module (42) is supplied with electrical power via a connector terminal (72) of the base module (40) and the sensor module (46) is supplied with low tension voltage via a connector terminal (72) of the base module (40), and
**in that** an input/output module (48) of the control unit (14) drives an input unit (52), wherein, in the case of a fault, there is activated via the input unit (52) a fault operation mode of the control unit (14), in which the power module (42) is directly controlled.

20. A method in accordance with Claim 19, **characterised in that** all of the envisaged functions are controlled independently in each control unit (14).

21. A method in accordance with Claim 19 or 20, **characterised in that** the respective control unit (14) communicates directly with the control unit (14) of at least one of the other functional units (10).

22. A method in accordance with any of the Claims 19 to 21, **characterised in that** each of the functional parameters required for the functioning of the functional unit are acquired by each control unit and the functional unit is controlled in accordance therewith.

23. A method in accordance with Claim 22, **characterised in that** a portion of the functional parameters is acquired by the control unit by means of direct communication with at least one of the other control units in the manufacturing plant.

24. A method in accordance with any of the Claims 19 to 23, **characterised in that** information is transmitted to a bus system or is received from a bus system by all of the control units.

25. A method in accordance with Claim 24, **characterised in that** each control unit can be programmed over the bus system.

26. A method in accordance with Claim 24 or 25, **characterised in that** the operation of each control unit can be checked over the bus system.

27. A method in accordance with Claim 26, **characterised in that** error messages are transmitted over the bus system by each control unit.

## Revendications

1. Installation de fabrication comportant une pluralité d'organes fonctionnels (10) réalisant au moins une fonction, collaborant dans l'installation de fabrication et dont chacun présente au moins un actionneur (16) et au moins un détecteur (18) pour la commande de fonction et/ou la surveillance de fonction, **caractérisée en ce que** chaque organe fonctionnel (10) présente au moins une unité de commande (14) intelligente exploitant l'organe fonctionnel (10) indépendamment de l'ordinateur central et selon un programme propre de commande de fonction, mémorisé dans une mémoire de programme (114), et qui pilote ledit au moins un actionneur (16) et/ou traite des signaux dudit au moins un détecteur (18) en fonction du programme de commande de fonction,
dans laquelle chaque unité de commande (14) comprend
→ un module de puissance (42) pilotant ledit au moins un actionneur (16) et présentant un branchement (82) pour amener à l'actionneur (16) l'énergie nécessaire ainsi qu'une surveillance de phase (88),
→ un module détecteur (46) exploitant ledit au moins un détecteur (18), reçoit les signaux de celui-ci et présente un branchement de détecteur (102) pour alimenter le détecteur (18) en basse tension,
→ un module de base (40) présentant un branchement (54) pour un réseau d'alimentation en énergie (20) qui est amené à l'unité de commande (14), un branchement (72) pour le module de puissance (42) par lequel le module de puissance (42) est alimenté en énergie électrique, ainsi qu'un branchement (72) pour le module détecteur (46) par lequel le branchement de détecteur (62) est alimenté en basse tension, et
→ un module d'entrée/sortie (48) exploitant un organe d'entrée (52), dans laquelle l'organe d'entrée (52) permet d'activer un mode de fonctionnement en cas d'incident de l'unité de commande (14) dans lequel le module de puissance (42) peut être piloté directement.

2. Installation de fabrication selon la revendication 1, **caractérisée en ce que** chaque unité de commande (14) exécute de façon autonome la totalité des fonctions prévues avec le programme de commande de fonction.

3. Installation de fabrication selon la revendication 1 ou 2, **caractérisée en ce que** l'unité de commande (14) d'un organe fonctionnel (10) communique directement avec l'unité de commande (14) d'au moins un autre des organes fonctionnels (10).

4. Installation de fabrication selon l'une des revendications précédentes, **caractérisée en ce que** chaque unité de commande (14) saisit tous les paramètres de fonction nécessaires pour la fonction de l'organe fonctionnel (10) et commande en fonction de ces paramètres l'organe fonctionnel (10).

5. Installation de fabrication selon l'une des revendications précédentes, **caractérisée en ce que** toutes les unités de commande (14) de l'installation de fabrication sont reliées à un système de bus (22).

6. Installation de fabrication selon la revendication 5, **caractérisée en ce que** chaque unité de commande (14) est capable de recevoir et d'émettre des signaux de communication par le système de bus (22).

7. Installation de fabrication selon la revendication 6, **caractérisée en ce que** chaque unité de commande (14) est programmable par l'intermédiaire du système de bus (22).

8. Installation de fabrication selon la revendication 6 ou 7, **caractérisée en ce que** le mode de travail de chaque unité de commande (14) est vérifiable par l'intermédiaire du système de bus (22).

9. Installation de fabrication selon l'une des revendications 6 à 8, **caractérisée en ce que** chaque unité de commande (14) émet des annonces d'erreur par l'intermédiaire du système de bus (22).

10. Installation de fabrication selon l'une des revendications précédentes, **caractérisée par le fait qu'**à chaque organe fonctionnel (10) est localement associée l'unité de commande (14).

11. Installation de fabrication selon la revendication 10, **caractérisée en ce que** l'actionneur (16), dont il y a au moins un, et le détecteur (18), dont il y a au moins un, de chaque unité de commande (14) sont directement câblés avec l'organe fonctionnel (10).

12. Installation de fabrication selon la revendication 10 ou 11, **caractérisée en ce que** chaque unité de commande (14) est directement disposée sur l'organe fonctionnel correspondant (10).

13. Installation de fabrication selon l'une des revendications 10 à 12, **caractérisée en ce que** le système de bus (22) est amené à chaque unité de commande associée localement à l'organe fonctionnel (10).

14. Installation de fabrication selon l'une des revendications précédentes, **caractérisée en ce que** chaque unité de commande (14) présente un module processeur (44) intelligent travaillant indépendamment de l'ordinateur central et commandé par le programme de la fonction, le module processeur (44) présentant un organe d'émission et de réception (116) qui réalise une liaison entre un organe processeur (110) du module processeur (44) et un système de bus (22).

15. Installation de fabrication selon l'une des revendications 1 à 14, **caractérisée en ce que** chaque unité de commande (14) présente un module de signalisation (50) intervenant sur une signalisation de la fonction.

16. Installation de fabrication selon l'une des revendications 1 à 15, **caractérisée en ce qu'**en fonctionnement normal, l'organe d'entrée (52) permet de générer des signaux de communication générés par d'autres unités de commande (14) pour l'unité de commande (14) respective.

17. Installation de fabrication selon l'une des revendications 1 à 16, **caractérisée en ce que** l'organe d'entrée (52) permet de signaliser les paramètres de fonction détectés par le détecteur (18).

18. Installation de fabrication selon l'une des revendications précédentes, **caractérisée en ce que** chaque organe fonctionnel (10) forme un tronçon fonctionnel propre de l'installation de fabrication.

19. Procédé d'exploitation d'une installation de fabrication comprenant pluralité d'organes fonctionnels (10) réalisant au moins une fonction, collaborant dans l'installation de fabrication et dont chacun présente au moins un actionneur (16) et au moins un détecteur (18) pour la commande de fonction et/ou la surveillance de fonction, **caractérisé en ce que** chaque organe fonctionnel (10) est exploité par une unité de commande (14) indépendamment de l'ordinateur central et selon un programme propre de commande de fonction, mémorisé dans une mémoire de programme (114), dans lequel l'actionneur (16) est piloté et/ou des signaux du détecteur (18) sont traités en fonction du programme de commande de fonction,
**en ce que** ledit au moins un actionneur (16) est piloté par un module de puissance (42) de l'unité de commande (14), dans lequel est prévue une surveillance de phase (88) et **en ce que** l'énergie nécessaire est amenée à l'actionneur (16) par une connexion (82) du module de puissance (42),
**en ce que** ledit au moins un détecteur (18) est exploité par un module détecteur (46) de l'unité de commande (14) et le détecteur (18) est alimenté en basse tension par l'intermédiaire d'un branchement de détecteur (102) du module détecteur (46),
**en ce qu'**un module de base (40) de l'unité de commande (14) est relié à un réseau d'alimentation en énergie (20) qui est amené à l'unité de commande (14), le module de puissance (42) est alimenté en énergie électrique par un branchement (72) du module de base (40) et le module détecteur (46) est alimenté en basse tension par un branchement (72) du module de base (40), et
**en ce qu'**un module d'entrée/sortie (48) de l'unité de commande (14) exploite un organe d'entrée (52), dans lequel, en cas d'incident, un mode de fonc-tionnement en cas d'incident de l'unité de commande (14), dans lequel le module de puissance (42) est piloté directement, est activé par l'organe d'entrée (52).

20. Procédé selon la revendication 19, **caractérisé en ce que** dans chaque unité de commande (14) la totalité des fonctions prévues est commandée de façon autonome.

21. Procédé selon la revendication 19 ou 20, **caractérisé en ce que** l'unité de commande (14) respective communique directement avec l'unité de commande (14) d'au moins un autre des organes fonctionnels (10).

22. Procédé selon l'une des revendications 19 à 21, **caractérisé en ce que** chaque unité de commande détecte tous les paramètres de fonction nécessaires à la fonction de l'organe fonctionnel et **en ce que** l'organe fonctionnel est commandé selon ceux-ci.

23. Procédé selon la revendication 22, **caractérisé en ce que** l'unité de commande détecte une partie des paramètres de fonction par communication directe avec au moins une autre des unités de commande de l'installation de fabrication.

24. Procédé selon l'une des revendications 19 à 23, **caractérisé en ce que** toutes les unités de commande émettent des informations à destination d'un système de bus ou en reçoivent en provenance d'un système de bus.

25. Procédé selon la revendication 24, **caractérisé en ce que** chaque unité de commande peut être programmée par l'intermédiaire du système de bus.

26. Procédé selon la revendication 24 ou 25, **caractérisé en ce que** le mode de travail de chaque unité de commande peut être vérifié par l'intermédiaire du système de bus.

27. Procédé selon la revendication 26, **caractérisé en ce que** des annonces d'erreur sont émises par chaque unité de commande par l'intermédiaire du système de bus.
